# FASCICULE DE BREVET EUROPEEN

(11) **EP 4 166 434 B1**
(45) Date de publication et mention de la délivrance du brevet: **28.08.2024**
(21) Numéro de dépôt: 22201825.1
(22) Date de dépôt: 17.10.2022
(51) Int. Cl.: B62J 27/30, B62H 7/00, B62K 11/04, B60R 21/013, B62J 6/05, B62J 6/20, B62J 6/26, B62J 27/20, B60R 21/00

(54) **DISPOSITIF DE PROTECTION POUR VÉHICULE MOTORISÉ À DEUX ROUES**
SCHUTZVORRICHTUNG FÜR EIN ZWEIRÄDRIGES KRAFTFAHRZEUG
PROTECTIVE DEVICE FOR A TWO-WHEELED MOTOR VEHICLE

(30) Priorité: 18.10.2021 FR 2111027
(43) Date de publication de la demande: 19.04.2023
(73) Titulaire: Deletang, Pascal, 74500 Saint Paul en Chablais (FR); Deletang, Nicolas, 74500 Neuvecelle (FR)
(72) Inventeur: Deletang, Pascal, 74500 Saint Paul en Chablais (FR); Deletang, Nicolas, 74500 Neuvecelle (FR)
(74) Mandataire: Innovincia

(56) Documents cités:
- AU-A1- 2007 202 023
- DE-U1- 202008 011 888
- FR-A1- 2 945 508
- KR-A- 20130 114 791

## Description

### Domaine technique de l'invention

La présente invention concerne un dispositif de protection pour véhicule motorisé à deux roues, notamment pour l'apprentissage de la conduite, comme par exemple pour une utilisation en moto-école ou pour les motocyclistes débutants. L'invention concerne également un véhicule motorisé à deux roues équipé dudit dispositif de protection.

### Arrière-plan technique

Les véhicules motorisés à deux roues de moto-école utilisés pour l'apprentissage de la conduite sont pourvus d'équipements de protection permettant d'éviter d'endommager la moto en cas de chute. Ces équipements de protection sont généralement constitués de tubes en acier mécanosoudés situés en périphérie de la moto.

Ces structures présentent cependant plusieurs inconvénients.

En cas de chute, la structure de protection contraint et déforme les pièces d'origine de la moto, et en particulier le guidon. La moto peut donc subir des dégâts matériels importants, entrainant une décote non négligeable à la revente.

De plus, ces dispositifs sont destinés à protéger la moto mais pas le motocycliste qui peut se retrouver coincé sous la moto.

Le document AU 2007 202 023 A1 divulgue un dispositif de protection pour véhicule motorisé à deux roues selon le préambule de la revendication 1.

### Résumé de l'invention

Un des buts de la présente invention est de proposer un dispositif de protection pour véhicule motorisé à deux roues amélioré.

L'invention est définie par un dispositif de protection pour véhicule motorisé à deux roues selon l'objet de la revendication 1. Des modes de réalisation préférés de l'invention sont définis par les revendications dépendantes.

L'invention a pour objet un dispositif de protection pour véhicule motorisé à deux roues, tel qu'une moto ou un scooter, notamment pour l'apprentissage de la conduite, comportant au moins trois paires d'armatures métalliques configurées pour être respectivement fixées de part et d'autre du véhicule motorisé à deux roues, notamment au niveau d'un guidon, d'un bloc moteur, des repose-pieds, d'une selle et d'une fourche du véhicule motorisé à deux roues, où le dispositif de protection comporte en outre des patins thermoplastiques fixés sur chaque armature en faisant saillie vers l'extérieur, les armatures déportant des faces de glissement des patins d'au moins 5cm du véhicule motorisé à deux roues, comme par exemple d'au moins 10cm, les faces de glissement des patins étant planes et allongées.

Les armatures et les patins peuvent être montés de manière symétrique sur le véhicule motorisé à deux roues par rapport à un plan médian longitudinal du véhicule quand celui-ci comporte deux pots d'échappement de part et d'autre. Dans le cas où le véhicule ne comporte qu'un pot d'échappement agencé sur un côté, l'armature située au niveau des repose-pieds est montée de manière asymétrique, uniquement du côté du pot d'échappement.

En cas de chute, le véhicule motorisé à deux roues glisse sur les patins plutôt que de s'arrêter brutalement, ce qui lui permet de disperser l'énergie et de ralentir sans augmenter trop les contraintes, c'est-à-dire en réduisant les risques d'endommagement du véhicule, notamment en évitant la déformation des pièces d'origine, et en particulier le guidon. Les patins de chaque flanc assurent une répartition du choc entre les patins et assurent qu'aucune pièce d'origine du véhicule ne subisse d'impact lors de la chute, et ce, quelle que soit la position que prend le véhicule en chutant. Les armatures permettent de déporter les patins du véhicule qui touchent le sol en premier cas de chute, protégeant ainsi le motocycliste. De plus, les armatures et les patins déportés par les armatures préservent un espace entre le véhicule et la route, ce qui protège le motocycliste en évitant son coincement et en facilitant son extraction.

Le dispositif de protection est compact et léger, il est donc très maniable et ne gêne pas la conduite.

Par ailleurs, les armatures peuvent être fixées par vissage au niveau de points d'ancrage d'origine et avec la boulonnerie du véhicule motorisé à deux roues. Le dispositif de protection est entièrement réversible. Il peut ainsi être monté/démonté sans modification des pièces d'origine. Il est alors possible d'équiper un véhicule motorisé à deux roues sans fragiliser ni modifier la structure d'origine, en respectant toutes les contraintes originales notamment de qualité, des couples de serrage ou de sécurité, c'est-à-dire sans perte d'homologation.

Les patins sont en matériau thermoplastique et présentent des faces de glissement planes et allongées pour favoriser le glissement des patins en cas de chute. Les faces de glissement sont par exemple trapézoïdales
Les patins sont par exemple en matériau POM (polyoxyméthylène) (ou Delrin ^{®}) ou en polyamide chargé (de fibres de verre ou autre) qui présentent un faible coefficient de frottement et une bonne résistance à l'abrasion. Ces matériaux présentent de bonnes caractéristiques mécaniques, ce qui permet leur fixation aux armatures et ils présentent de bonnes qualités de glissement (faible coefficient de frottement) et de tenue à l'abrasion.

Les patins sont par exemple tous identiques.

Ils présentent par exemple des arêtes biseautées ou arrondies. Les arêtes des patins ne présentent pas d'angles saillants (angles vifs) supérieurs à 15° pour respecter les normes de sécurité en vigueur.

Les patins présentent par exemple un nez de forme moins large qu'à l'arrière du patin. Le nez du patin forme par exemple un angle compris entre 30 et 60° avec un plan vertical.

Les nez des patins permettent un contact plus progressif des patins sur la route en cas de chute, assurant une augmentation progressive du frottement et donc une dissipation progressive du choc. Par ailleurs, la forme profilée permet d'améliorer l'aérodynamisme et le design du véhicule équipé.

Selon l'invention, le dispositif de protection comporte au moins une première paire d'armatures fixée de part et d'autre du guidon, une deuxième paire d'armatures fixée de part et d'autre du bloc moteur et une troisième paire d'armatures fixée de part et d'autre dudit véhicule à l'arrière des repose-pieds.

Selon un exemple de réalisation, la première paire d'armatures comprend une première et une deuxième armatures respectivement fixées d'une part à un embout de guidon et d'autre part à une embase du guidon ou à un boitier de compteur surmontant l'embase du guidon, en formant un cadre avec le guidon saillant vers l'avant et sur un côté respectif dudit véhicule, les patins fixés aux armatures de la première paire formant un coin du cadre respectif le plus éloigné du véhicule motorisé à deux roues.

Les armatures de la première paire peuvent en outre comporter un renfort respectif, orienté vers l'avant du véhicule motorisé à deux roues, fixé d'une part au guidon, à l'extrémité de la poignée reliée à l'embase, et d'autre part au cadre, sur le côté situé à l'avant du véhicule motorisé à deux roues.

La deuxième paire d'armatures est fixée de part et d'autre du bloc moteur. Les deux armatures de la deuxième paire sont montées de manière symétrique sur la véhicule motorisé à deux roues par rapport au plan médian longitudinal du véhicule.

La troisième paire d'armatures est fixée de part et d'autre du véhicule motorisé à deux roues, à l'arrière des repose-pieds, au niveau du(es) pot(s) d'échappement du véhicule.

Le dispositif de protection peut comporter une quatrième paire d'armatures dont les armatures présentent respectivement une forme d'aile recourbée, les armatures étant configurées pour être fixées de part et d'autre de la selle, les patins étant fixés à une extrémité d'une aile respective, en faisant saillie latéralement du véhicule motorisé à deux roues.

Le dispositif de protection peut comporter une cinquième paire d'armatures respectivement configurées pour être fixées de part et d'autre de la fourche du véhicule motorisé à deux roues.

Les armatures sont par exemple formées de bandes ou plaques métalliques.

Les patins peuvent présenter une face de fixation plane au niveau de la surface de contact avec l'armature. Les patins peuvent être fixés par vissage aux armatures, par exemple à l'intérieur des patins. Un montage amovible des patins permet de remplacer facilement les patins qui se seraient abimés.

Par ailleurs, le dispositif de protection peut comporter des dispositifs d'éclairage, comme des feux de position, pour l'éclairage de nuit notamment, et/ou des catadioptres et/ou des clignotants fixés aux armatures et/ou aux patins. En effet, les armatures et les patins offrent un support additionnel pour l'éclairage de sécurité ou pour modifier le design général du véhicule.

Le dispositif de protection peut comporter au moins un détecteur de chute, tel qu'un capteur de contraintes ou un capteur optique, monté dans une armature ou un patin, configuré pour détecter une chute du véhicule et pour déclencher un airbag du véhicule associé au détecteur de chute et/ou pour communiquer avec un téléphone cellulaire du motocycliste, par exemple pour donner l'alerte et/ou donner une position GPS, par exemple à des contacts pré-enregistrés afin de déclencher les secours, en cas de détection d'une chute.

L'invention a aussi pour objet un véhicule motorisé à deux roues équipé, comportant un véhicule motorisé à deux roues et un dispositif de protection tel que décrit précédemment monté sur ledit véhicule.

### Brève description des figures

D'autres caractéristiques et avantages de l'invention ressortiront de la description suivante, donnée à titre d'exemple et sans caractère limitatif, en regard des dessins annexés sur lesquels :
[Fig.1] La figure 1 montre une vue de côté d'un véhicule motorisé à deux roues équipé d'un dispositif de protection.
[Fig.2] La figure 2 montre une vue du guidon du véhicule de la figure 1 et d'une première paire d'armatures pourvue de patins, les armatures étant fixées de part et d'autre du guidon.
[Fig.3] La figure 3 montre un détail du véhicule vu de côté, au niveau d'un bloc moteur et d'une armature pourvue d'un patin, l'armature étant fixée à un châssis du bloc moteur.
[Fig.4] La figure 4 montre une vue d'un côté du véhicule et d'une armature pourvue d'un patin, l'armature étant fixée au niveau d'un repose-pied.
[Fig.5] La figure 5 montre une vue de l'autre côté du véhicule et d'une armature pourvue d'un patin, l'armature étant fixée au niveau d'un autre repose-pied.
[Fig.6] La figure 6 montre une vue de l'arrière du véhicule et d'une cinquième paire d'armatures pourvue de patins, fixées de part et d'autre de la selle.
[Fig.7] La figure 7 montre une vue de côté du véhicule et d'une armature pourvue d'un patin, l'armature étant fixée au niveau d'une fourche.
[Fig.8] La figure 8 est une vue similaire à la figure 2 illustrant une variante de réalisation.
[Fig.9] La figure 9 est une vue similaire à la figure 2 montrant une variante de réalisation.

Sur toutes les figures, les mêmes éléments portent les mêmes numéros de référence.

Les réalisations suivantes sont des exemples.

On définit par supérieur, inférieur, latéral, avant et arrière, les orientations relatives au véhicule avec les roues posées au sol.

### Description détaillée

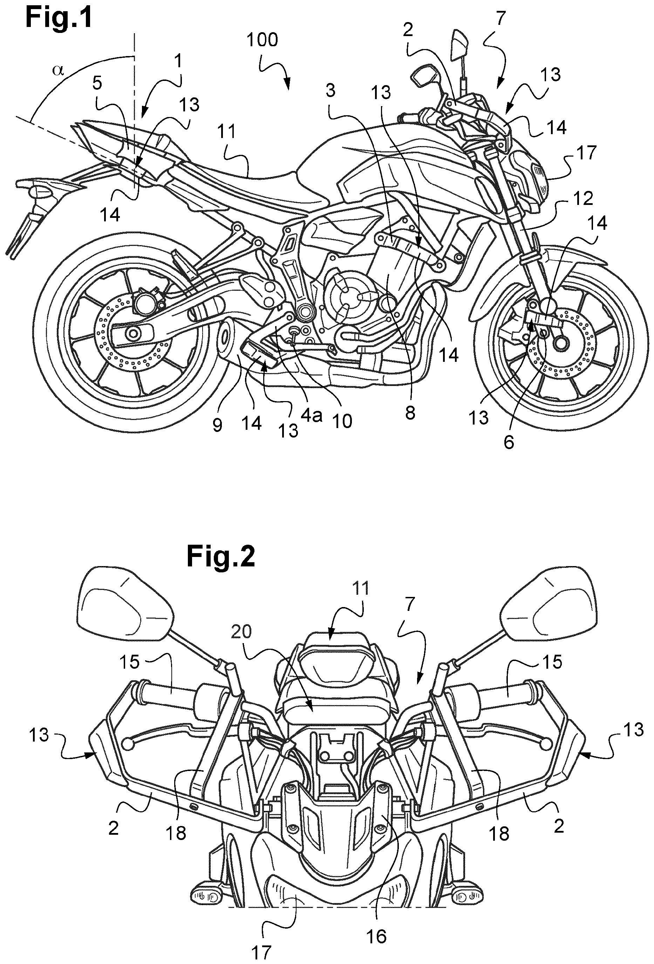

La figure 1 montre un exemple de véhicule motorisé à deux roues équipé d'un dispositif de protection 1, notamment pour l'apprentissage de la conduite, comme par exemple pour une utilisation en moto-école ou pour les motocyclistes débutants.

Le dispositif de protection 1 comporte au moins trois paires d'armatures 2, 3, 4a, 4b, 5, 6, métalliques configurées pour être respectivement fixées de part et d'autre du véhicule motorisé à deux roues 100, notamment au niveau d'un guidon 7, d'un bloc moteur 8, des repose-pieds 10, d'une selle 11 et d'une fourche 12 du véhicule motorisé à deux roues 100.

Le dispositif de protection 1 comporte en outre des patins 13 thermoplastiques fixés sur chaque armature 2, 3, 4a, 4b, 5, 6 en faisant saillie vers l'extérieur, les armatures 2, 3, 4a, 4b, 5, 6 déportant des faces de glissement 14 des patins 13 d'au moins 5cm du véhicule motorisé à deux roues 100, comme d'au moins 10cm, les faces de glissement 14 des patins 13 étant planes et allongées.

Les armatures 2, 3, 4a, 4b, 5, 6 et les patins 13 sont montés de manière symétrique sur le véhicule motorisé à deux roues 100 par rapport à un plan médian longitudinal du véhicule motorisé à deux roues 100, excepté pour la troisième paire d'armatures 4a, 4b située au niveau des repose-pieds 10 du fait que le véhicule illustré ne possède qu'un seul pot d'échappement 9 sur un côté. Le montage est symétrique pour les véhicules motorisés à deux roues équipés d'un pot d'échappement de chaque côté.

Le dispositif de protection 1 comporte au moins une première paire d'armatures 2 fixée de part et d'autre du guidon 7, une deuxième paire d'armatures 3 fixée de part et d'autre du bloc moteur 8 et une troisième paire d'armatures 4a, 4b fixée de part et d'autre du véhicule motorisé à deux roues 100, à l'arrière des repose-pieds 10.

Les armatures 2, 3, 4a, 4b, 5, 6 sont par exemple formées de bandes ou plaques métalliques. Elles sont par exemple réalisées en alliage d'aluminium pour être particulièrement légères et faciles à réaliser.

Les armatures 2, 3, 4a, 4b, 5, 6 sont par exemple fixées par vissage, par exemple au niveau de points d'ancrage d'origine du véhicule motorisé à deux roues 100 et avec la boulonnerie du véhicule motorisé à deux roues 100. Autrement dit, elles sont vissées sur des points d'ancrage d'origine et par des vis de fixation d'origine, déjà présents sur le véhicule 100 d'origine. Le dispositif de protection 1 est entièrement réversible. Il peut ainsi être monté/démonté sans modification des pièces d'origine. Il est alors possible d'équiper un véhicule motorisé à deux roues 100 sans fragiliser ou modifier la structure d'origine en respectant toutes les contraintes originales notamment de qualité, des couples de serrage ou de sécurité, c'est-à-dire sans perte d'homologation.

Les patins 13 peuvent présenter une face de fixation plane au niveau de la surface de contact avec l'armature 2, 3, 4a, 4b, 5, 6. Les patins 13 peuvent être fixés par vissage aux armatures 2, 3, 4a, 4b, 5, 6 par exemple à l'intérieur des patins 13. Un montage amovible des patins 13 permet de remplacer facilement les patins 13 qui se seraient abimés.

Comme mieux visible sur la figure 2, la première paire d'armatures 2 comporte une première et une deuxième armatures 2 par exemple respectivement fixées d'une part au guidon 7, par exemple à un embout de guidon, c'est-à-dire l'extrémité d'une poignée 15 du guidon 7, et d'autre part, à une embase 16 du guidon 7, par exemple au niveau d'une embase 16 du guidon 7 à l'arrière d'un phare 17 du véhicule 100.

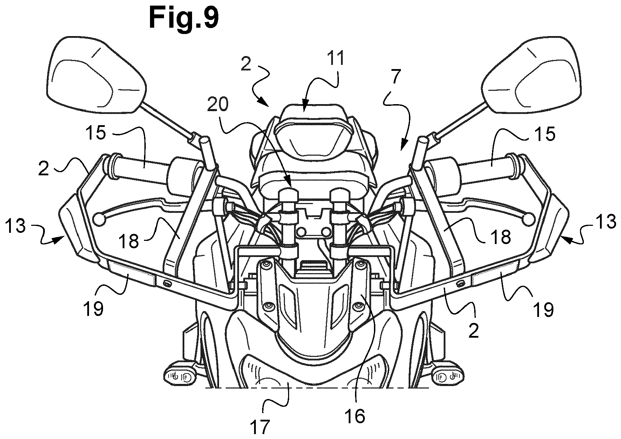

Selon un autre exemple représenté sur la figure 9, les armatures 2 sont respectivement fixées d'une part au guidon 7, par exemple à un embout de guidon, c'est-à-dire l'extrémité d'une poignée 15 du guidon 7, et d'autre part à un boitier de compteur 20, à l'arrière de celui-ci, le boitier de compteur 20 surmontant l'embase 16 du guidon 7, de manière à faire face au motocycliste. Ce deuxième exemple permet qu'en cas de chute, la rotation du guidon 7 souvent inévitable, ne déforme les armatures 2 qui pourraient à leur tour risquer de déformer la fourche 12. Dans ce cas, les vis de serrage à l'embase 16 du guidon 7 peuvent servir de détrompeurs.

Les armatures 2 sont par exemple fixées par vissage au niveau de points d'ancrage d'origine du guidon 7.

Chaque armature 2 de la première paire présente une forme de « L » formant un cadre avec le guidon 7, saillant vers l'avant et sur un côté respectif du véhicule motorisé à deux roues 100. Le cadre présente une forme générale de parallélogramme dont le côté situé à l'avant est le plus long. Les deux cadres des armatures 2 sont montés de manière symétrique sur le véhicule motorisé à deux roues 100 par rapport à un plan médian longitudinal du véhicule 100.

Les patins 13 sont fixés aux armatures 2 de la première paire au niveau d'un coin (alors tronqué) du cadre respectif, le plus éloigné du véhicule motorisé à deux roues 100.

Les armatures 2 de la première paire peuvent en outre comporter un renfort 18 respectif, orienté vers l'avant du véhicule 100, fixé d'une part au guidon 7, à l'extrémité de la poignée 15 reliée à l'embase 16, et d'autre part au cadre, sur le côté situé à l'avant du véhicule 100.

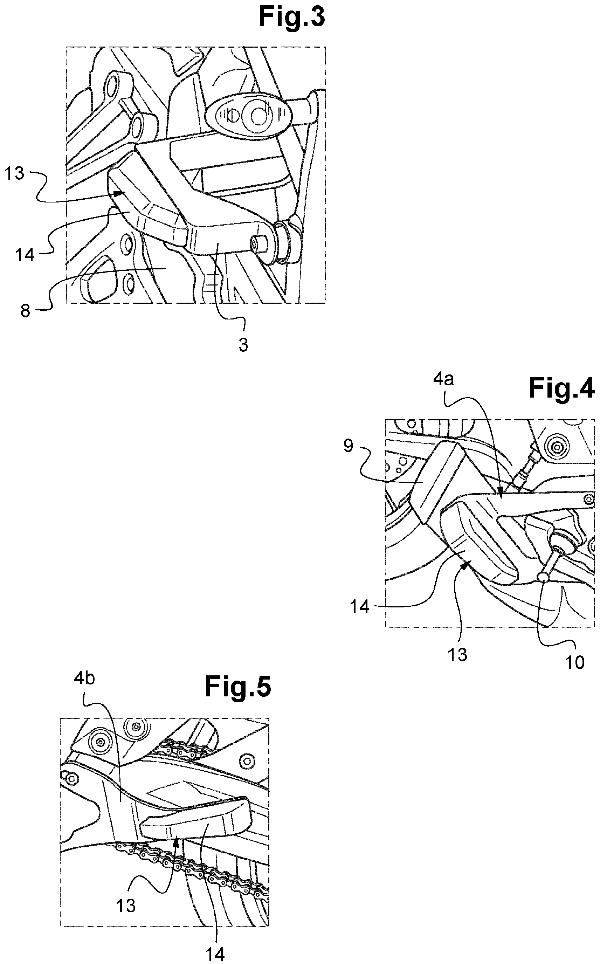

Comme mieux visible sur la figure 3, une deuxième paire d'armatures 3 est fixée de part et d'autre du bloc moteur 8. Les deux armatures 3 de la deuxième paire sont montées de manière symétrique sur le véhicule motorisé à deux roues 100 par rapport au plan médian longitudinal du véhicule 100. Les armatures 3 sont par exemple fixées par vissage, par exemple au niveau de points d'ancrage d'origine du châssis du bloc moteur 8. Chaque armature 3 présente par exemple une forme d'étrier (ou de « U ») déportant les patins 13, les patins 13 étant fixés sur les dos respectifs des étriers, les armatures 3 étant fixées au niveau des extrémités des branches des étriers.

Comme mieux visible sur les figures 4 et 5, une troisième paire d'armatures 4a, 4b est fixée de part et d'autre du véhicule 100, à l'arrière des repose-pieds 10, au niveau du pot d'échappement 9 d'un côté du véhicule 100.

Les armatures 4a, 4b sont par exemple fixées par vissage, par exemple au niveau de points d'ancrage d'origine du châssis du véhicule 100, tel que les platines repose-pieds.

Une première armature 4a présente par exemple une forme d'étrier (ou de « U ») déportant le patin 13, le patin 13 étant fixé sur un côté du dos de l'étrier, l'armature 4 étant fixée au niveau des extrémités des branches de l'étrier (figures 1, 4 et 6).

Le patin 13 est situé devant le pot d'échappement 9 qu'il protège également et le pot d'échappement 9 situé derrière la première armature 4a permet d'éviter l'enfoncement de la première armature 4a en cas de chute.

Une deuxième armature 4b présente par exemple une forme de fourche à deux dents déportant le patin 13, le patin 13 étant fixé sur un côté du manche de la fourche, l'armature 4b étant fixée au niveau des extrémités des dents de la fourche (figure 5).

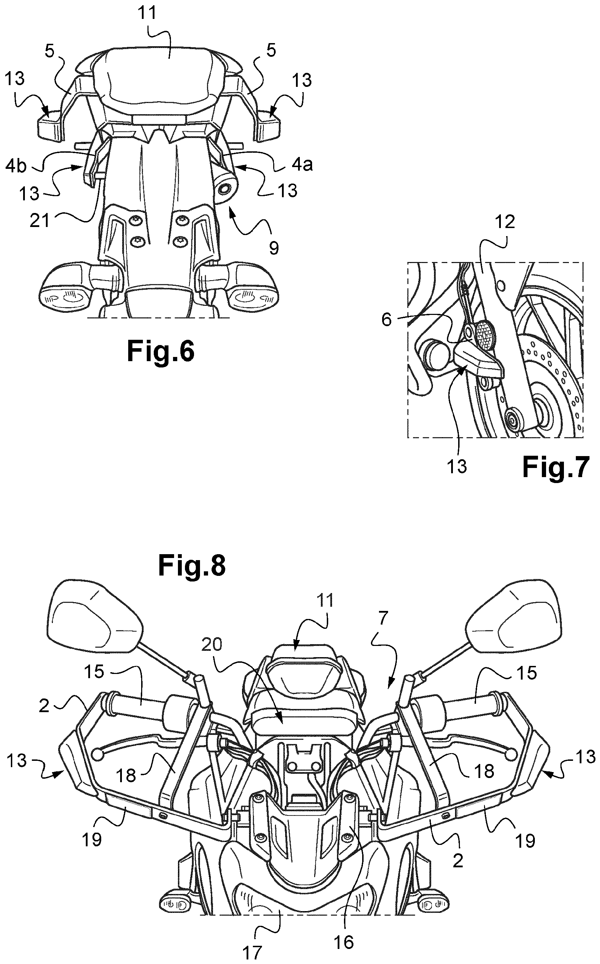

Le dispositif de protection 1 peut en outre comporter une cale 21 agencée à l'arrière de la deuxième armature 4b, au dos du patin 13, pour éviter l'enfoncement de la deuxième armature 4b en cas de chute (figure 6).

Comme on peut également le voir sur la figure 6, le dispositif de protection 1 peut comporter une quatrième paire d'armatures 5 présentant respectivement une forme d'aile recourbée vers le bas, l'extrémité de l'aile étant verticale lorsque le véhicule 100 est positionné debout.

Les armatures 5 de la quatrième paire sont configurées pour être fixées de part et d'autre de la selle 11 du véhicule 100, par exemple sous la selle 11, les armatures 5 étant montées de manière symétrique sur le véhicule 100 par rapport au plan médian longitudinal du véhicule 100. Les armatures 5 sont par exemple fixées par vissage, par exemple au niveau de points d'ancrage d'origine de la selle 11. Les patins 13 sont fixés à l'extrémité d'une aile respective, en faisant saillie latéralement du véhicule motorisé à deux roues 100.

Comme on peut le voir sur la figure 7, le dispositif de protection 1 peut comporter une cinquième paire d'armatures 6 respectivement configurées pour être fixées de part et d'autre de la fourche 12 du véhicule 100, les armatures 6 étant montées de manière symétrique sur le véhicule 100 par rapport au plan médian longitudinal du véhicule 100. Les armatures 6 sont par exemple fixées sur des points d'ancrage d'origine des étriers de frein respectifs.

Il y a ainsi trois à cinq patins 13 agencés symétriquement de chaque côté du véhicule 100.

Les patins 13 sont en matériau thermoplastique et présentent des faces de glissement 14 planes et allongées pour favoriser le glissement des patins 13 en cas de chute. Les faces de glissement 14 sont par exemple trapézoïdales.

Les patins 13 sont par exemple en matériau POM (polyoxyméthylène) (ou Delrin ^{®}) ou en polyamide chargé (de fibres de verre ou autre) qui présentent un faible coefficient de frottement et une bonne résistance à l'abrasion. Ces matériaux présentent de bonnes caractéristiques mécaniques, ce qui permet leur fixation aux armatures 2, 3, 4, 5, 6 et ils présentent de bonnes qualités de glissement (faible coefficient de frottement) et de tenue à l'abrasion.

Les patins 13 sont par exemple tous identiques.

Ils présentent par exemple des arêtes biseautées ou arrondies. Les arêtes des patins 13 ne présentent pas d'angles saillants (angles vifs) supérieurs à 15° pour respecter les normes de sécurité en vigueur.

Les patins 13 présentent par exemple un nez de forme moins large qu'à l'arrière du patin 13 (dans le sens d'avance du véhicule). Les nez des patins 13 permettent un contact plus progressif des patins 13 sur la route en cas de chute, assurant une augmentation progressive du frottement et donc une dissipation progressive du choc. Par ailleurs, la forme profilée permet d'améliorer l'aérodynamisme et le design du véhicule 100 équipé.

La direction dans laquelle s'étendent les allongements des faces de glissement 14 des patins 13 est par exemple inclinée par rapport à la verticale, par exemple d'un angle α compris entre 30° et 60° (l'angle est par exemple schématisé sur le patin 13 fixé à l'armature 5 fixée sous la selle 11 sur la figure 1).

En cas de chute, le véhicule motorisé à deux roues 100 glisse sur les patins 13 plutôt que de s'arrêter brutalement, ce qui lui permet de disperser l'énergie et de ralentir sans augmenter trop les contraintes, c'est-à-dire en réduisant les risques d'endommagement du véhicule 100, notamment en évitant la déformation des pièces d'origine, et en particulier le guidon 7.

Les patins 13 de chaque flanc assurent une répartition du choc entre les patins 13 et assurent qu'aucune pièce d'origine du véhicule 100 ne subisse d'impact lors de la chute, et ce quelle que soit la position que prend le véhicule 100 en chutant.

Les armatures 2, 3, 4a, 4b, 5, 6 permettent de déporter les patins 13 du véhicule 100 qui touchent le sol en premier cas de chute, protégeant ainsi le motocycliste.

De plus, les armatures 2, 3, 4a, 4b, 5, 6 et les patins 13 déportés par les armatures 2, 3, 4a, 4b, 5, 6 préservent un espace entre le véhicule 100 et la route, ce qui protège le motocycliste en évitant son coincement et en facilitant son extraction.

Le dispositif de protection 1 est compact et léger, il est donc très maniable et ne gêne pas la conduite.

Par ailleurs, le dispositif de protection 1 peut comporter des dispositifs d'éclairage, comme des feux de position, pour l'éclairage de nuit notamment, et/ou des catadioptres 19 (figure 8) et/ou des clignotants fixés aux armatures 2, 3, 4a, 4b, 5, 6 et/ou aux patins 13. En effet, les armatures 2, 3, 4a, 4b, 5, 6 et les patins 13 offrent un support additionnel pour l'éclairage de sécurité ou pour modifier le design général du véhicule 100.

Le dispositif de protection 1 peut comporter au moins un détecteur de chute, tel qu'un capteur de contraintes ou un capteur optique, monté dans une armature 2, 3, 4a, 4b, 5, 6 ou un patin 13. Le détecteur de chutes est configuré pour détecter une chute du véhicule 100 et pour déclencher un airbag du véhicule 100 associé au détecteur de chute et/ou pour communiquer avec un téléphone cellulaire du motocycliste, par exemple pour donner l'alerte et/ou donner une position GPS, par exemple à des contacts pré-enregistrés afin de déclencher les secours, en cas de détection d'une chute. Tous les patins 13 sont par exemple pourvus d'au moins un détecteur de chute configuré pour déclencher au moins un airbag, un airbag pouvant être déclenché par plusieurs détecteurs de chute.

## Revendications

1. Dispositif de protection (1) pour véhicule motorisé à deux roues (100), notamment pour l'apprentissage de la conduite, comportant au moins trois paires d'armatures (2, 3, 4a, 4b, 5, 6) métalliques configurées pour être respectivement fixées de part et d'autre du véhicule motorisé à deux roues (100), notamment au niveau d'un guidon (7), d'un bloc moteur (8), de repose-pieds (10), d'une selle (11) et d'une fourche (12) du véhicule motorisé à deux roues (100), comportant en outre des patins (13) thermoplastiques fixés sur chaque armature (2, 3, 4a, 4b, 5, 6) en faisant saillie vers l'extérieur, **caractérisé par** les armatures (2, 3, 4a, 4b, 5, 6) déportant des faces de glissement (14) des patins (13) d'au moins 5cm du véhicule motorisé à deux roues (100), les faces de glissement (14) des patins (13) étant planes et allongées, le dispositif de protection (1) comportant au moins une première desdites paires d'armatures (2) configurée pour être fixée de part et d'autre du guidon (7), une deuxième desdites paires d'armatures (3) configurée pour être fixée de part et d'autre du bloc moteur (8) et une troisième desdites paires d'armatures (4a, 4b) configurée pour être fixée de part et d'autre du véhicule motorisé à deux roues (100) à l'arrière des repose-pieds (10).

2. Dispositif de protection (1) selon la revendication 1, **caractérisé en ce que** les armatures (2, 3, 4a, 4b, 5, 6) sont configurées pour être fixées par vissage au niveau de points d'ancrage d'origine et avec la boulonnerie du véhicule motorisé à deux roues (100).

3. Dispositif de protection (1) selon l'une des revendications précédentes, **caractérisé en ce que** les patins (13) présentent un nez de forme moins large qu'à l'arrière du patin (13).

4. Dispositif de protection (1) selon l'une des revendications précédentes, **caractérisé en ce que** la première paire d'armatures (2) comprend une première et une deuxième armatures (2) configurées pour être respectivement fixées d'une part à un embout de guidon et d'autre part à une embase (16) du guidon (7) ou à un boitier de compteur (20) surmontant l'embase (16) du guidon (7), en formant un cadre avec le guidon (7) saillant vers l'avant et sur un côté respectif du véhicule motorisé à deux roues (100), les patins (13) fixés aux armatures (2) de la première paire formant un coin du cadre respectif le plus éloigné du véhicule motorisé à deux roues (100).

5. Dispositif de protection (1) selon l'une des revendications précédentes, **caractérisé en ce qu'**il comporte une quatrième desdites paires d'armatures (5) dont les armatures (5) présentent respectivement une forme d'aile recourbée, les armatures (5) étant configurées pour être fixées de part et d'autre de la selle (11), les patins (13) étant fixés à une extrémité de l'aile respective, en faisant saillie latéralement du véhicule motorisé à deux roues (100).

6. Dispositif de protection (1) selon l'une des revendications précédentes, **caractérisé en ce qu'**il comporte une cinquième desdites paires paire d'armatures (6) respectivement configurées pour être fixées de part et d'autre de la fourche (12) du véhicule motorisé à deux roues (100).

7. Dispositif de protection (1) selon l'une des revendications précédentes, **caractérisé en ce qu'**il comporte des dispositifs d'éclairage, comme des feux de position et/ou des catadioptres (19) et/ou des clignotants fixés aux armatures (2, 3, 4a, 4b, 5, 6) et/ou aux patins (13).

8. Dispositif de protection (1) selon l'une des revendications précédentes, **caractérisé en ce qu'**il comporte au moins un détecteur de chute monté dans un des patins (13) ou une des armatures (2, 3, 4a, 4b, 5, 6) configuré pour déclencher un airbag du véhicule motorisé à deux roues (100) et/ou pour communiquer avec un téléphone cellulaire du motocycliste, en cas de détection d'une chute.

9. Véhicule motorisé à deux roues équipé, comportant un véhicule motorisé à deux roues (100) et un dispositif de protection (1) selon l'une quelconque des revendications précédentes monté sur ledit véhicule (100).

## Patentansprüche

1. Schutzvorrichtung (1) für ein zweirädriges Kraftfahrzeug (100), insbesondere für die Fahrausbildung, welche mindestens drei Paare von metallischen Beschlagteilen (2, 3, 4a, 4b, 5, 6) umfasst, die dafür ausgelegt sind, jeweils beiderseits des zweirädrigen Kraftfahrzeugs (100) befestigt zu werden, insbesondere an einer Lenkstange (7), einem Motorblock (8), Fußrasten (10), einem Sattel (11) und einer Gabel (12) des zweirädrigen Kraftfahrzeugs (100), und welche außerdem thermoplastische Gleitbacken (13) umfasst, die an jedem Beschlagteil (2, 3, 4a, 4b, 5, 6) so befestigt sind, dass sie nach außen vorstehen,
**dadurch gekennzeichnet, dass** die Beschlagteile (2, 3, 4a, 4b, 5, 6) Gleitflächen (14) der Gleitbacken (13) um mindestens 5 cm von dem zweirädrigen Kraftfahrzeug (100) weg verlagern, wobei die Gleitflächen (14) der Gleitbacken (13) eben und lang gestreckt sind, wobei die Schutzvorrichtung (1) mindestens ein erstes der Paare von Beschlagteilen (2), das dafür ausgelegt ist, beiderseits der Lenkstange (7) befestigt zu werden, ein zweites der Paare von Beschlagteilen (3), das dafür ausgelegt ist, beiderseits des Motorblocks (8) befestigt zu werden, und ein drittes der Paare von Beschlagteilen (4a, 4b), das dafür ausgelegt ist, beiderseits des zweirädrigen Kraftfahrzeugs (100) hinter den Fußrasten (10) befestigt zu werden, umfasst.

2. Schutzvorrichtung (1) nach Anspruch 1, **dadurch gekennzeichnet, dass** die Beschlagteile (2, 3, 4a, 4b, 5, 6) dafür ausgelegt sind, durch Verschraubung an den ursprünglichen Verankerungspunkten und mit den Befestigungsmitteln des zweirädrigen Kraftfahrzeugs (100) befestigt zu werden.

3. Schutzvorrichtung (1) nach einem der vorhergehenden Ansprüche, **dadurch gekennzeichnet, dass** die Gleitbacken (13) einen Vorderteil mit einer weniger breiten Form als der hintere Teil der Gleitbacke (13) aufweisen.

4. Schutzvorrichtung (1) nach einem der vorhergehenden Ansprüche, **dadurch gekennzeichnet, dass** das erste Paar von Beschlagteilen (2) ein erstes und ein zweites Beschlagteil (2) umfasst, die dafür ausgelegt sind, jeweils einerseits an einem Endstück der Lenkstange und andererseits an einem Fuß (16) der Lenkstange (7) oder an einem über dem Fuß (16) der Lenkstange (7) aufragenden Zählergehäuse (20) befestigt zu werden, wobei sie mit der Lenkstange (7) einen nach vorn vorstehenden Rahmen auf einer jeweiligen Seite des zweirädrigen Kraftfahrzeugs (100) bilden, wobei die an den Beschlagteilen (2) des ersten Paares befestigten Gleitbacken (13) eine Ecke des jeweiligen Rahmens bilden, die von dem zweirädrigen Kraftfahrzeug (100) am weitesten entfernt ist.

5. Schutzvorrichtung (1) nach einem der vorhergehenden Ansprüche, **dadurch gekennzeichnet, dass** sie ein viertes der Paare von Beschlagteilen (5) umfasst, bei dem die Beschlagteile (5) jeweils eine gekrümmte Flügelform aufweisen, wobei die Beschlagteile (5) dafür ausgelegt sind, beiderseits des Sattels (11) befestigt zu werden, wobei die Gleitbacken (13) an einem Ende des jeweiligen Flügels befestigt sind, wobei sie von dem zweirädrigen Kraftfahrzeug (100) seitlich vorstehen.

6. Schutzvorrichtung (1) nach einem der vorhergehenden Ansprüche, **dadurch gekennzeichnet, dass** sie ein fünftes der Paare von Beschlagteilen (6) umfasst, die jeweils dafür ausgelegt sind, beiderseits der Gabel (12) des zweirädrigen Kraftfahrzeugs (100) befestigt zu werden.

7. Schutzvorrichtung (1) nach einem der vorhergehenden Ansprüche, **dadurch gekennzeichnet, dass** sie Beleuchtungsvorrichtungen umfasst, wie Begrenzungsleuchten und/oder Rückstrahler (19) und/oder Blinkleuchten, die an den Beschlagteilen (2, 3, 4a, 4b, 5, 6) und/oder an den Gleitbacken (13) befestigt versehen.

8. Schutzvorrichtung (1) nach einem der vorhergehenden Ansprüche, **dadurch gekennzeichnet, dass** sie mindestens einen in einer der Gleitbacken (13) oder einem der Beschlagteile (2, 3, 4a, 4b, 5, 6) angebrachten Sturzdetektor umfasst, der dafür ausgelegt ist, im Falle der Detektion eines Sturzes einen Airbag des zweirädrigen Kraftfahrzeugs (100) auszulösen und/oder mit einem Mobiltelefon des Motorradfahrers zu kommunizieren.

9. Ausgerüstetes zweirädriges Kraftfahrzeug, welches ein zweirädriges Kraftfahrzeug (100) und eine Schutzvorrichtung (1) nach einem der vorhergehenden Ansprüche, die an dem Fahrzeug (100) angebracht ist, umfasst.

## Claims

1. Protective device (1) for a two-wheeled motorized vehicle (100), notably for learning to ride, comprising at least three pairs of metal fittings (2, 3, 4a, 4b, 5, 6) configured to be respectively fastened on either side of the two-wheeled motorized vehicle (100), notably at a handlebar (7), an engine block (8), a footrest (10), a saddle (11) and a fork (12) of the two-wheeled motorized vehicle (100), further comprising thermoplastic pads (13) fastened to each fitting (2, 3, 4a, 4b, 5, 6) and projecting towards the outside, **characterized by** the fittings (2, 3, 4a, 4b, 5, 6) offsetting sliding faces (14) of the pads (13) by at least 5 cm from the two-wheeled motorized vehicle (100), the sliding faces (14) of the pads (13) being planar and elongate, the protective device (1) comprising at least a first of said pairs of fittings (2) that is configured to be fastened on either side of the handlebar (7), a second of said pairs of fittings (3) that is configured to be fastened on either side of the engine block (8), and a third of said pairs of fittings (4a, 4b) that is configured to be fastened on either side of the two-wheeled motorized vehicle (100) to the rear of the footrests (10).

2. Protective device (1) according to Claim 1, **characterized in that** the fittings (2, 3, 4a, 4b, 5, 6) are configured to be fastened by screwing at original anchoring points and with the nut and bolt fasteners of the two-wheeled motorized vehicle (100).

3. Protective device (1) according to either of the preceding claims, **characterized in that** the pads (13) have a nose with a shape that is less wide than at the rear of the pad (13).

4. Protective device (1) according to one of the preceding claims, **characterized in that** the first pair of fittings (2) comprises first and second fittings (2) that are configured to be respectively fastened, on the one hand, to an end piece of the handlebar and, on the other hand, to a base (16) of the handlebar (7) or to a speedometer housing (20) overlying the base (16) of the handlebar (7), thereby forming a frame with the handlebar (7) projecting towards the front and on a respective side of the two-wheeled motorized vehicle (100), the pads (13) fastened to the fittings (2) of the first pair forming a corner of the respective frame that is furthest away from the two-wheeled motorized vehicle (100).

5. Protective device (1) according to one of the preceding claims, **characterized in that** it comprises a fourth of said pairs of fittings (5) whose fittings (5) respectively have a curved wing shape, the fittings (5) being configured to be fastened on either side of the saddle (11), the pads (13) being fastened to one end of the respective wing and projecting laterally from the two-wheeled motorized vehicle (100).

6. Protective device (1) according to one of the preceding claims, **characterized in that** it comprises a fifth of said pairs of fittings (6) that are respectively configured to be fastened on either side of the fork (12) of the two-wheeled motorized vehicle (100).

7. Protective device (1) according to one of the preceding claims, **characterized in that** it comprises lighting devices, such as position lights and/or retroreflectors (19) and/or turn indicators, fastened to the fittings (2, 3, 4a, 4b, 5, 6) and/or to the pads (13).

8. Protective device (1) according to one of the preceding claims, **characterized in that** it comprises at least one fall detector that is mounted in one of the pads (13) or one of the fittings (2, 3, 4a, 4b, 5, 6) and configured to trigger an airbag of the two-wheeled motorized vehicle (100) and/or to communicate with a mobile phone of the motorcyclist in the event of a fall being detected.

9. Equipped two-wheeled motorized vehicle, comprising a two-wheeled motorized vehicle (100) and a protective device (1) according to any one of the preceding claims that is mounted on said vehicle (100).
